# EUROPEAN PATENT SPECIFICATION

(11) **EP 2 195 608 B1**
(45) Date of publication and mention of the grant of the patent: **12.08.2020**
(21) Application number: 08831094.1
(22) Date of filing: 03.09.2008
(51) Int. Cl.: G01B 11/24, G01B 11/00, G01C 11/02

(54) **SYSTEM AND METHOD FOR MULTIFRAME SURFACE MEASUREMENT OF THE SHAPE OF OBJECTS**
SYSTEM UND VERFAHREN ZUR MEHRBILD-OBERFLÄCHENMESSUNG DER FORM VON OBJEKTEN
SYSTÈME ET PROCÉDÉ DE MESURE DE FORME D'OBJETS PAR MESURE DE SURFACE D'IMAGES MULTIPLES

(30) Priority: 12.09.2007 US 854518
(43) Date of publication of application: 16.06.2010
(73) Proprietor: Artec Europe S.à r.l., 2328 Luxembourg (LU)
(72) Inventor: LAPA, Nikolay, L., Jaroslavl' (RU)
(74) Representative: CMS Cameron McKenna Nabarro Olswang LLP
(86) International application number: PCT/US2008/075150
(87) International publication number: WO 2009/035890

(56) References cited:
- WO-A1-2006/094409
- WO-A1-2007/030026
- JP-A- 9 096 506
- JP-A- 2001 082 941
- JP-A- 2006 030 127
- US-A- 6 081 273
- US-A1- 2003 025 788

## Description

### BACKGROUND OF THE INVENTION

### FIELD OF THE INVENTION

The disclosure relates to the three-dimensional ("3D") surface measurement of material objects.

### BACKGROUND DISCUSSION

There are known devices and methods for performing non-contact measurement of a 3-D surface shape of a material object, such as through the use of a structured-light or stereoscopic triangulation method. The structured-light triangulation method of measuring the surface shape of material objects utilizes the projection of structured light onto the surface of the object that is, generally, an amplitude-modulated, time-modulated and/or wavelength-modulated ("structured light"). An image of structured light projected onto the surface of an object (hereinafter referred to as "the image") is captured by a camera in a direction different from the direction that the structured light is projected. The image is then analyzed to calculate the shape of the object's surface.

3D scanners use such triangulation methods to measure the surface shape of an entire object. However, 3D scanners can typically only measure a portion of the surface of the object at a time, and it is typically necessary to make a series of scans from various angles and then merge the resulting 3D images together in order to measure the shape of the entire surface. To avoid noticeable mistakes when merging the series of scans together, it is necessary to know the point and direction from which each scan was made with an accuracy no less than accuracy of each scan. WO2007/030026A1 describes a hand-held mobile 3D scanning for scanning a scene using a position and orientation sensor that is arranged to sense the position and orientation of the scanner during the scane of the scene and generate representative position and orientation information. WO 2006/094409A1 describes a system for 3D scanning and digitization of the surface geometry of object by fixing additional targets as positioning features on the object and using the reflections of a projected laser pattern on the objects surface to calculate position and orientation. US6081273 describes a system with one or more cameras, a calibration apparatus, a graphic interface and software for building a virtual reality object model. US2003/0025788A1 describes first and second cameras have a fixed physical relationship to each other. Only the second images acquired by the second camera are analysed to determine corresponding positions of the second camera while acquiring the first images.

A number of solutions have previously been attempted to achieve this level of accuracy, including: 1) fixing the 3D scanner in place and using a precise rotating table to mount the object, 2) using a precision device to move the scanner around the object, 3) identifying the position and orientation of the scanner by using an array of sensors (e.g., radio, optical, or magnetic sensors) positioned around the vicinity of the object to determine the position of an emitter installed inside the 3D scanner, and 4) using several 3D scanners mounted on a rigid structure distributed about the object.

However, each of the prior attempted solutions suffer from a number of shortcomings: high costs, bulkiness, non-portability, long scanning times, inability to scan moving objects, and certain application limitations (e.g., they cannot be used to scan sensitive objects that cannot be moved or touched such as museum exhibits).

### SUMMARY

A system and method are provided for the multiframe surface measurement of the shape of material objects, according to the independent claims. The system and method include capturing a plurality of images of portions of the surface of the object being measured and merging the captured images together in a common reference system. In one aspect, the shape and/or texture of a complex-shaped object can be measured using at least two 3D scanners, each including a reference object position thereon, by capturing multiple images from different positions and perspectives and subsequently merging the images in a common coordinate system to align the merged images together. Alignment is achieved by capturing images of both a portion of the surface of the object and also a reference surface having known characteristics (e.g., shape and/or texture).

### DRAWINGS

The above-mentioned features and objects of the present disclosure will become more apparent with reference to the following description taken in conjunction with the accompanying drawings wherein like reference numerals denote like elements and in which:
FIG. 1 is a block diagram perspective view of a system for the multiframe surface measurement of the shape of material objects in accordance with one or more not claimed examples of the present disclosure.
FIG. 2 is an operational flow diagram of a method for the multiframe surface measurement of the shape of material objects in accordance with one or more not claimed examples of the present disclosure.
FIG. 3 is a block diagram perspective view of a system for the multiframe surface measurement of the shape of material objects in accordance with one or more not claimed examples of the present disclosure.
FIGS. 4A-4B are a block diagram perspective views of a system for the multiframe surface measurement of the shape of material objects in accordance with one or more not claimed examples of the present disclosure.
FIG. 5 is a block diagram perspective view of a system for the multiframe surface measurement of the shape of material objects in accordance with one or more not claimed examples of the present disclosure.
FIG. 6 is a block diagram representation of a system for the multiframe surface measurement of the shape of material objects in accordance with one or more embodiments of the present disclosure.
FIG. 7 is a block diagram representation of a system for the multiframe surface measurement of the shape of material objects in accordance with one or more embodiments of the present disclosure.

### DETAILED DESCRIPTION

In general, the present disclosure includes a system and method for the multiframe surface measurement of the shape of material objects in accordance with one or more not claimed examples and embodiments of the present disclosure. Certain not claimed examples and embodiments of the present disclosure will now be discussed with reference to the aforementioned figures, wherein like reference numerals refer to like components.

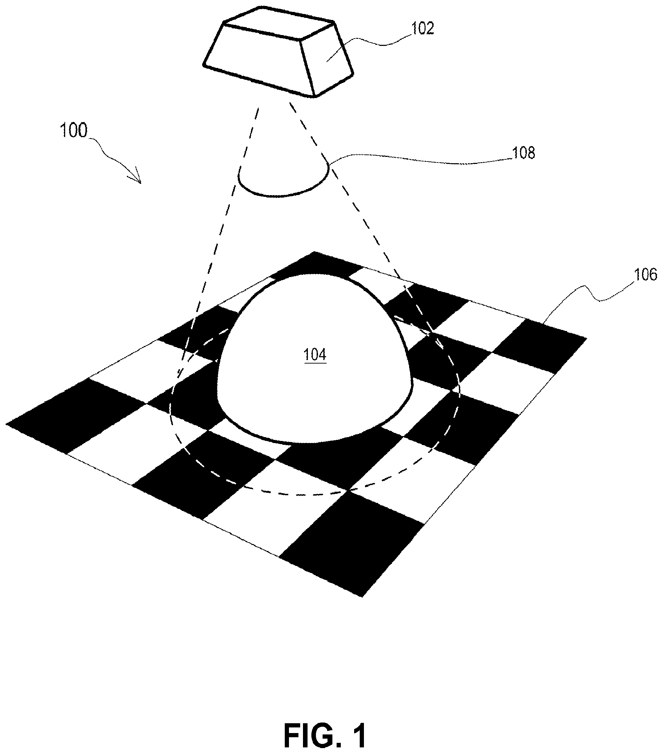

Referring now to FIG. 1, a block diagram illustration of a system 100 for the multiframe surface measurement of the shape of material objects is shown generally in accordance with one or more not claimed examples. The system 100 includes a scanning device 102 for scanning the surface of an object 104. Scanning device 102 may comprise a 3D scanner for capturing an image of an object, a photometric scanner or camera for capturing photometric characteristics of the object 104 (e.g., 2D image texture, color, brightness, etc.), another type of image capturing device or a combination thereof, Hereinafter, for purposes of brevity, scans that are performed in connection with determining 3D measurements (e.g., shape) of the surface of the object 104 will be referred to as "surface scanning," and scans that are performed in connection with determining photometric characteristics, texture or other 2D measurements of the object 104 will be referred to as "texture scanning." Further, the term image as used herein when used by itself shall refer to a 3D image, a 2D image, another type of image, or any combination of any of the foregoing types of images. The object 104 is positioned adjacent to a reference object 106. The scanning device 102 includes a field of view 108 that at least partially includes a portion of the object 104 and a portion of the reference object 106. The field of view 108 is preferably conical but may comprise other shaped fields as well.

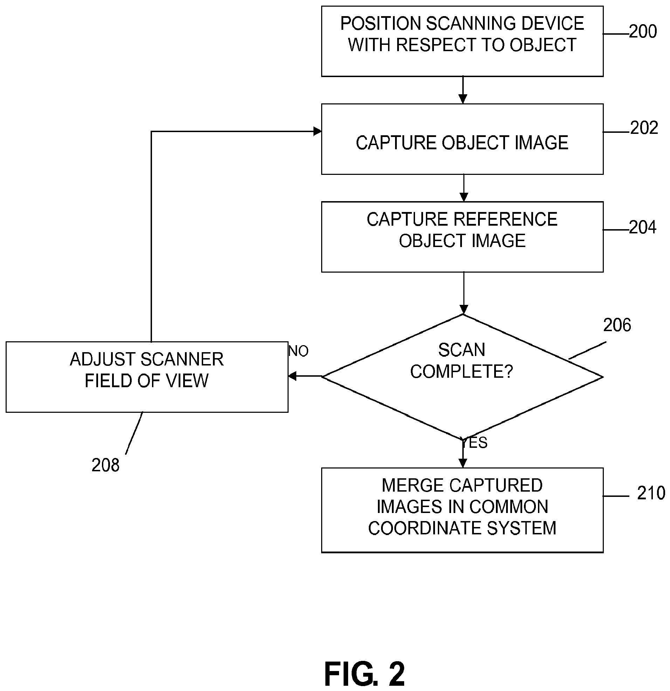

With further reference to FIG. 2, an operational flow diagram is illustrated for the process employed by the system 100 for the multiframe surface measurement of the shape of the object 104. Initially, in step 200 the scanning device 102 is positioned in a desired relationship with respect to the object 104. The scanning device 102 then captures an image of at least a portion of the object 104 in step 202, while the scanning device 102 also captures an image of at least a portion of the reference object 106 in step 204. The image of the object 104 captured by the scanning device 102 includes at least a 3D image of the object 104 and optionally also includes a 2D image or another type of image of the object 104. In one or more embodiments, the image of the reference object 106 captured by the scanning device 102 is at least one of a 3D image or a 2D image. Steps 202 and 204 may be performed separately or alternatively as part of the same image capturing step or alternatively in the reverse sequence. The reference object 106 includes certain reference characteristics such as but not limited to a coded pattern and/or a certain shape. The object 104 is maintained motionless in relation to the reference object 106 (e.g. such as by mounting the object 104 on the reference object 106 or vice versa) while the image is being captured. The object 104 and the reference object 106 can also move in relation to each other during scanning.

It is then determined in step 206 whether the scan is complete and the desired image of the object 104 has been captured in its entirety. If the image capture is not complete, then the field of view 108 of the scanning device 102 is adjusted with respect to the object 104 in step 208 in order to capture an image of another portion of the object 104. For example, the position of the entire scanning device 102 can be moved or the camera field of view 108 can be adjusted. The process then returns to steps 202/204 to perform another image capture of at least a portion of the object 104 and at least a portion of the reference object 106. The above steps are successively repeated until enough images (e.g., frames) of the desired portion of the object 104 are captured. In each of the positions of the scanning device 102, the field of view 108 must contain at least a portion of the reference object 106 sufficient for determining the position and orientation of the scanning device 102 in the coordinate system of the reference object 106. In step 210, the multiple captured images or frames are combined together into a common coordinate system of the reference object 106 using any known coordinate transformation technique. Each captured image can be considered a frame that is merged together to form the multiframe image of the object 104 that can be used to calculate a surface measurement of the object 104.

In this manner the shape and/or texture of a complex-shaped object 104 can be measured using a scanning device 102 by capturing multiple images of the object 104 from different points of view and directions and subsequently merging the captured images or frames in a common coordinate system to align the merged images together. Alignment is achieved by capturing both a portion of the surface of the object 104 and also a reference object 106 having known characteristics (e.g., shape and texture). This allows the position and orientation of the scanning device 102 to be determined in the coordinate system of the reference object 106.

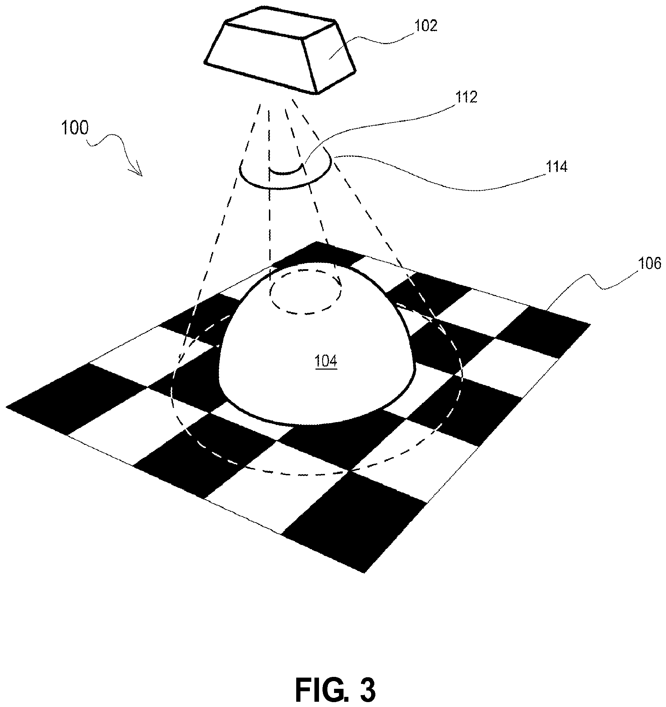

Referring now to FIG. 3, the scanning device 102 may comprise multiple scanners or cameras with multiple fields of view: at least one field of view 112 for capturing shape measurement (e.g., surface scanning) and at least one field of view 114 for capturing the surface texture (e.g., texture scanning). Each of the fields of view 112 and 114 encompass at least a portion of the object 104 being imaged, where at least one of the fields of view 112 and 114 must also contain at least a portion of the reference object 106 sufficient for determining the position and orientation of the scanning device 102 in the coordinate system of the reference object 106. During the image capturing process, the position or orientation of the scanning device 102 is successively changed so as to cover all positions necessary for the fields of view 112 and 114 to capture the entire desired surface of the object 104. In each of these orientations, at least one of the fields of view 112 and 114 must contain a portion of the reference object 106. The images captured by the surface scanning and texture scanning can then be combined in the common coordinate system of the reference object 106.

One of the fields of view 112 and 114 can be used for a reference image, such that the position and orientation of the scanning device 102 associated with the other of the fields of view 112 and 114 can be converted into the reference object 106's coordinate system.

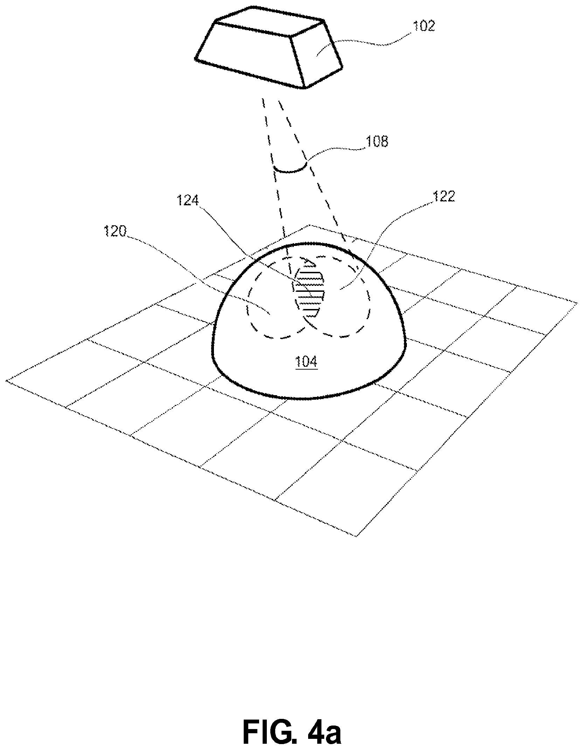

Referring now to FIG. 4A, in one not claimed example, the system 100 for the multiframe surface measurement of the shape of material objects can utilize a portion 120 of the object 104 being having known characteristics (e.g., an already known or previously calculated shape and/or texture) to supply the reference characteristics instead of a separate reference object. The first portion 120 of the object 104 to be captured is selected to contain certain known, previously calculated or easily calculated shape and textural features. The subsequent images that are captured by the scanning device 102 on different portions of the object 104 will be made in the coordinate system of the portion 120 already captured. The field of view 108 of the portion of the object 104 to imaged includes part of the previously captured portion 120 that is sufficient for determining the position and orientation of the scanning device 102 in relation to it. For a portion 122 being currently captured, there will be an overlapping region 124 on the object 102 that includes a portion of the previously captured portion 120. In this manner, the previously captured portion 120 serves as the reference object. The scanning device 102 illustrated in FIG. 4A is illustrated having a single field of view 108; however, it is understood that in this not claimed example and in all other examples and embodiments described herein that the field of view 108 may also include a plurality of fields of view (e.g., the pair of surface scanning field of view 112 and texture scanning field of view 114).

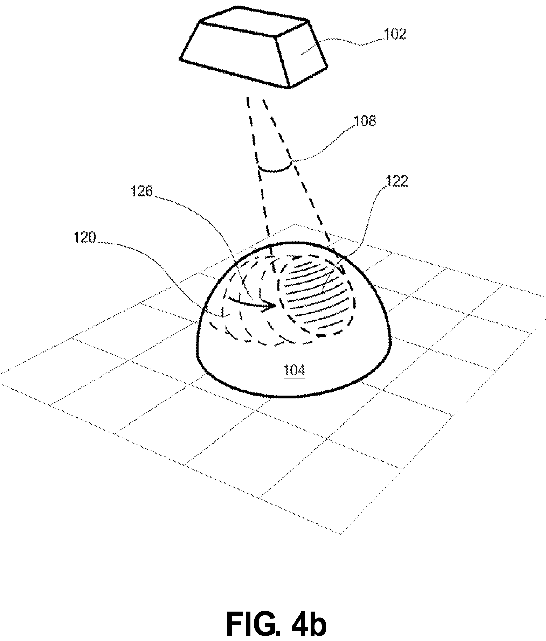

Referring now to FIG. 4B, the known portion 120 will continue to expand subsequent image captures, for instance, as illustrated by the directional arrow 126 showing the movement of the previous fields of view 108 of the scanning device 102. The field of view 108 moves in such a manner that each subsequent section of the object 104 to imaged includes part of the previously captured portion 120 that is sufficient for determining the position and orientation of the scanning device 102 in relation to it. Thus, with each subsequent image captures, the known portion 120 increases in size (accumulating) until it encompassed the entire desired portion of the object 104 to be captured.

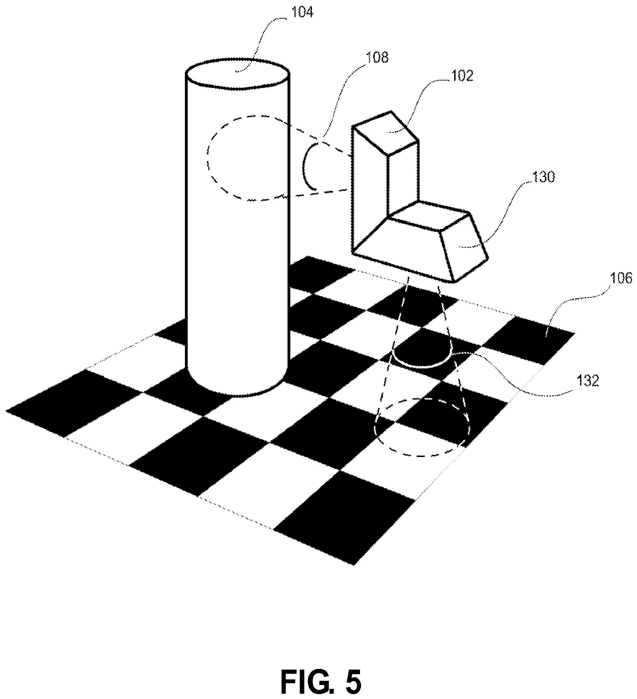

Referring now to FIG. 5, in one not claimed example, the system 100 for the multiframe surface measurement of the shape of material objects may include an additional scanning device 130 having an additional field of view 132, where field of view 132 may include both a surface scanning field of view 112 and a texture scanning field of view 114. The scanning device 102 captures an image of the object 104 for measuring the shape and/or surface texture of the object, while the other scanning device 130 includes a field of view 132 in a different direction from the object 104 that captures an image of the reference object 106 for determining the spatial position of the scanning device 130. Through a known relationship between the object scanning device 102 and the reference object scanning device 130, the position and orientation of the object scanning device 102 can be converted into the reference object 106's coordinate system.

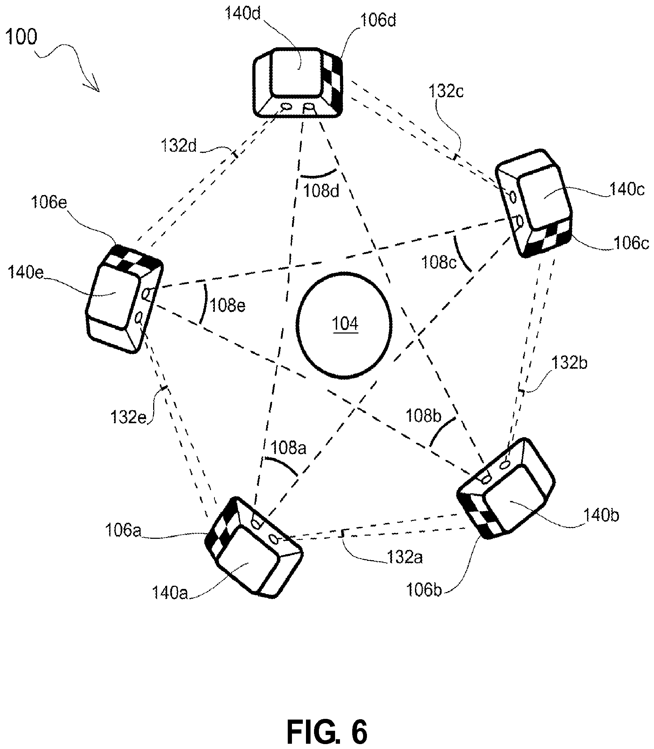

Referring now to FIG. 6, in one or more embodiments, the system 100 for the multiframe surface measurement of the shape of material objects may include a plurality of scanning devices 140 (e.g., 140a, 140b, 140c, 140d, 140e ...) that each have a respective reference object 106 (e.g., 106a, 106b, 106c, 106d, 106e ...) positioned thereon. Similar to the examples described in connection with FIG. 5, each scanning device 140 includes a respective field of view 108 (or pair of fields of view 112 and 114) of the object 104 being captured and also a respective reference object field of view 132 of an adjacent reference object 106 located on an adjacent scanning device 140. In one embodiment, the scanning devices 140 are positioned in a succession around the object 104, with each device 140's fields of view 108 capturing a portion of the object 102 being scanned while a second field of view 132 captures at least a portion of the reference object 106 mounted on the next scanning device 140 in the succession. For instance, scanning device 140a will have a field of view 108a (or pair of fields of view 112a and 114a) of the object 104 and will also have a field of view 132a of the reference object 106b located on the adjacent scanning device 140b. Each of the scanning devices 140 can determine its position in the coordinate system of the reference object 106 it captures its field of view 132. The continuity of such an arrangement in succession enables all of the captured images of the reference objects 106 (e.g., 106a, 106b, 106c, 106d, 106e ...) to be converted into a common coordinate system. In one or more embodiments, each scanning device 140 can comprise a pair of scanning devices 102 and 130 similar to the arrangement described in connection with FIG. 5, where through a known relationship between each object scanning device 102 and its respective reference object scanning device 130, the position and orientation of the object scanning device 102 can be converted into common coordinate system of the reference object 106.

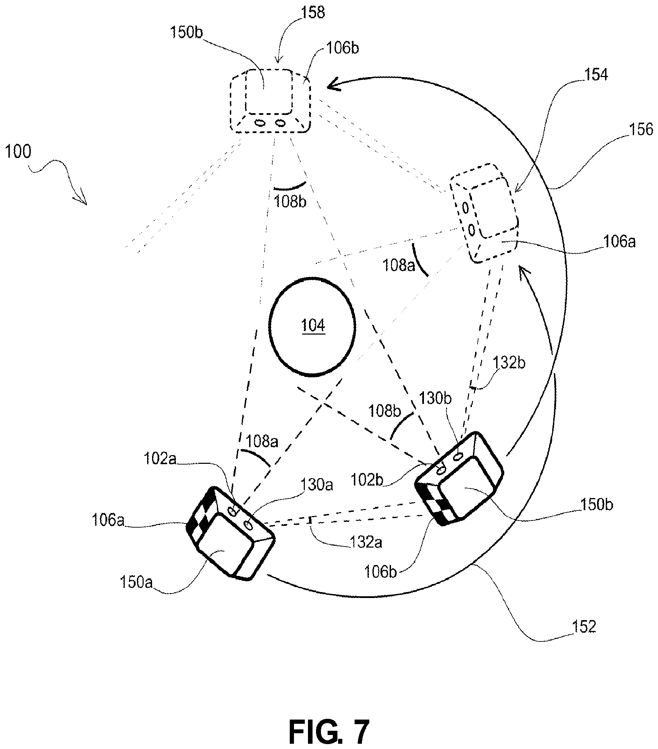

Referring now to FIG. 7, in one or more embodiments, the system 100 for the multiframe surface measurement of the shape of material objects can perform successive object captures and reference object captures using successive captures at locations around the object 104, similar to the successive system of FIG. 6, but by using only two scanning devices 150a and 150b that are moved in relation to one another one by one to various positions around the object 104. Each scanning device 150a and 150b includes an object scanning device 102 having a field of view 108 and a reference object scanning device 130 having a reference object field of view 132, similar to the embodiment described in connection with FIG. 6. Each of the scanning devices 150a and 150b also includes a respective reference object 106a and 106b mounted thereon.

In one or more embodiments, each step of moving of the scanning devices 150a and 150b in other position around the object 104 comprises: a) moving one of the scanning devices 150a and 150b in another position such that the moved scanning device has a respective field of view 108 of at least a portion of the surface of the object 104 being captured and such that the scanning device 150 that was not moved has a respective field of view 132 of at least a portion of the surface of the reference object 106 mounted on the scanning device 150 that was moved; b) capturing images of the respective portions of the surface of the object 104 to be captured in the field of views 108a and 108b of each of the scanning devices 150a and 150b and capturing an image of the respective portion of the surface of the reference object 106 in the field of view 132 of the scanning device 150 that was not moved; c) transforming the captured images of the respective portions of the surface of the object 104 to be measured as well as the images of the portions of the object 104 to be measured captured and merged from prior configurations into a common reference coordinate system of one of the reference objects 106 that, in one or more embodiments, can be the reference object 106 mounted on the scanning device 150 that was moved; d) merging the images of the respective portions of the surface of the object 104 to be measured in the coordinate system of one of the reference objects 106 with the images of the portions of the object 104 to be measured captured and merged from prior configurations. In one or more embodiments, at the first step of moving one of the scanning devices 150a and 150b to another position, either of the scanning devices 150a and 150b can be moved. In one or more embodiments, at each step except the first positioning step, the scanning device 150 that is moved should be the scanning device 150 that was not moved at the previous repositioning step.

An example of the foregoing operation of the system 100 of FIG. 7 will now be set forth. Each of the scanning devices 150a and 150b are positioned in relation to the object 104 such that the field of view 132a of the scanning device 150a observes the reference object 106b on the scanning device 150b. The scanning device 150b captures an image of a portion of the object 104 from field of view 108b, while scanning device 150a captures an image of another portion of the object 104 from field of view 108a. The scanning device 150a also captures an image of the reference object 106b on the scanning device 150b and determines the position of the scanning device 150a in the coordinate system of the reference object 106b of the scanning device 150b. The images captured of the object 104 in the fields of view 108a and 108b by the scanning devices 150a and 150b are then converted to the coordinate system of the reference object 106b and merged together in the coordinate system of the reference object 106b.

One of the scanning devices 150, e.g., scanning device 150a, is then moved to a different position in relation to the object 104, so that the reference object field of view 132b of the scanning device 150b observes the reference object 106a mounted on the scanning device 150a, For instance, the scanning device 150a can be moved as indicated by directional arrow 152.

The scanning device 150a then captures an image of a portion of the object 104 from field of view 108a at new position 154 and transforms the captured image into the coordinate system of the reference object 106a. Scanning device 150b also captures an image of the reference object 106a mounted on the scanning device 150a and determines the position of the scanning device 150b in the reference object 106a coordinate system. The portion of the object 104 previously captured by the scanning devices 150a and 150b and previously merged together are then converted to the coordinate system of the reference object 106a and merged with the image of the portion of the object 104 captured from field of view 108a at new position 154.

The other scanning device 150, e.g., scanning device 150b, that was not the one that was just previously moved is then is moved to a different position in relation to the object 104, so that the reference object field of view 132a of the scanning device 150a observes the reference object 106b mounted on the scanning device 150b. For instance, the scanning device 150b can be moved as indicated by directional arrow 156 to new position 158. The scanning device 150b then captures a new image of the object 104 at position 158. Scanning device 150a captures an image of the reference object 106b and determines the position of the scanning device 150a in the coordinate system of the reference object 150b. The portion of the surface of the object 104 previously scanned and merged in the reference object 150a coordinate system is converted to the reference object 150b coordinate system and merged with the object image captured by the scanning device 150b at position 158. This process of alternatingly resituating the scanning devices 150a and 150b is repeated until the entire surface of the object 104 has been captured in a frame-by-frame format and merged into a multiframe image in a common coordinate system.

In one or more embodiments, the scanning devices 140 and 150 can be connected to a computing system (not shown) for controlling the operation of the scanning devices 140 and 150 and also for performing the necessary calculations for coordinate conversation, merging and other image processing. The computing system may comprise a general-purpose computer system which is suitable for implementing the method for the multiframe surface measurement of the shape of material objects in accordance with the present disclosure. The computing system is only one example of a suitable computing environment and is not intended to suggest any limitation as to the scope of use or functionality of the invention. In various embodiments, the present system and method for the multiframe surface measurement of the shape of material objects is operational with numerous other general purpose or special purpose computing system environments or configurations. Examples of well known computing systems, environments, and/or configurations that may be suitable for use with the invention include, but are not limited to, personal computers, server computers, hand-held or laptop devices, multiprocessor systems, microprocessor-based systems, programmable consumer electronics, networked PCs, minicomputers, mainframe computers, distributed computing environments that include any of the above systems or devices, and the like.

In various embodiments, the triangulation algorithms and the method for the multiframe surface measurement of the shape of material objects may be described in the general context of computer-executable instructions, such as program modules, being executed by a computer. Generally, program modules include routines, programs, objects, components, data structures, etc. that perform particular tasks or implement particular abstract data types. These algorithms and methods may also be practiced in distributed computing environments where tasks are performed by remote processing devices that are linked through a communications network. In a distributed computing environment, program modules may be located in both local and remote computer storage media including memory storage devices, in one embodiment, the computing system implements multiframe surface measurement of the shape of material objects by executing one or more computer programs. The computer programs may be stored in a memory medium or storage medium such as a memory and/or ROM, or they may be provided to a CPU through a network connection or other I/O connection.

The system and method formed in accordance with the embodiments described herein provide for the accurate measurement of the surface and/or texture of large and/or complex-shaped objects by allowing multiple frames of images to be merged together in a common coordinate system. These teachings can be applied to a whole range of scientific and engineering problems that require accurate data about the surface shape of an object, distance to the surface, or its spatial orientation. The present system and method has useful applications in many fields, including but not limited to digital imaging, the control of part shapes, computer animation, capturing the shape of objects that have cultural, historical or scientific value, shape recognition, topography, machine vision, medical procedures, special positioning of devices and robots, etc.

## Claims

1. A method for surface measurement of an object (104), comprising:
capturing, by each of at least two scanning devices (140a-140e; 150a-150b), at least one three dimensional, 3D, image of at least a portion of a surface of the object (104) to be measured, wherein each scanning device (140b; 150b) includes a reference object (106b) positioned thereon;
capturing, by at least one of the scanning devices (140a; 150a), at least one 3D image of at least a portion of a surface of the reference object (106b) on another scanning device (140b; 150b);
transforming, through a coordinate transformation technique, using the at least one 3D image of the at least portion of the surface of the reference object (106b), captured 3D images of the portions of the surface of the object (104) to be measured into a common coordinate system; and
merging the captured 3D images of the portions of the surface of the object (104) to be measured in the common coordinate system.

2. The method of claim 1, wherein the captured 3D images of the portions of the surface of the object to be measured further include information regarding the object to be measured.

3. The method of claim 1, wherein 3D images are taken with a scanning device **characterized by** a field of view and said field of view is adapted to provide for capturing both 3D images of said object to be measured and 3D images of said reference object at the same time.

4. The method of claim 1, wherein the 3D images of the portions of the surface of the object to be measured are captured in fields of view that are separate from the fields of view for capturing of the 3D images of the portions of the reference object.

5. The method of claim 1, further comprising:
positioning a plurality of scanning devices in various locations with respect to the object to be measured such that each of the scanning devices has a respective first field of view oriented toward at least a portion of the object to be measured,
wherein each of the plurality of scanning devices comprises a reference object having certain reference characteristics positioned thereon,
wherein each of the plurality of scanning devices has a respective second field of view oriented toward at least a portion of a reference object,
wherein each of the plurality of scanning devices is positioned with respect one another such that the second field of view of at least one of the scanning devices is directed toward at least a portion of the surface of the reference object of another scanning device;
capturing 3D images of the respective portions of the surface of the object to be measured in the first field of view of each of the scanning devices;
capturing 3D images of the respective portions of the surface of the reference objects in the second field of view of each of the scanning devices that observes respective reference objects;
transforming, through a coordinate transformation technique, using at least one of the 3D images of the respective portions of the surface of the reference objects, the captured 3D images of the respective portions of the surface of the object to be measured into a common coordinate system, and
merging all of the captured images of the respective portions of the surface of the object to be measured together in the common coordinate system.

6. The method of claim 1, further comprising:
positioning first and second scanning devices of the at least two scanning devices at a first configuration with respect to said object to be measured such that each of said first and said second scanning devices has a respective first field of view of at least a portion of the surface of said object to be measured,
wherein each of said scanning devices includes a reference object having certain reference characteristics positioned thereon,
wherein each of said scanning devices has a respective second field of view oriented toward at least a portion of the surface of a reference object,
wherein said scanning devices are positioned with respect one another such that the second field of view of one of the scanning devices observes at least a portion of the surface of the reference object located on the other scanning device;
capturing 3D images of the respective portions of the surface of said object to be measured in the first field of view of each of said scanning devices;
capturing a 3D image of the respective portion of the surface of the reference object in the second field of view of the scanning device oriented toward the respective portion of the surface of the reference object;
transforming, using the 3D image of at least a portion of the surface of the reference objects, said captured 3D images of the respective portions of the surface of said object to be measured captured at first configuration into a common coordinate system;
merging the captured 3D images of the respective portions of the surface of said object to be measured captured at first configuration in the common coordinate system;
repetitively repositioning one of the first and second scanning devices one by one in an alternating manner in different configurations and:
capturing at each configuration 3D images of the respective portions of the surface of said object to be measured in the first field of view of each of the scanning devices;
capturing at each configuration a 3D image of the respective portion of the surface of the reference objects in the second field of view of the scanning device that observes the respective portion of the surface of the reference object;
transforming, through a coordinate transformation technique, using the 3D image of the respective portion of the surface of one of the reference objects, at each configuration captured 3D images of the respective portions of the surface of said object to be measured and the 3D images of the portions of said object to be measured captured and transformed from prior configurations into a common coordinate system;
merging each configuration the 3D images of the respective portions of the surface of said object to be measured in the common coordinate system with the 3D images of the portions of the object to be measured captured and transformed from prior configurations.

7. The method of claim 1, wherein the captured 3D image of a portion of the surface of said object to be measured is obtained with a structured-light triangulation method.

8. A system (100) for surface measurement of an object (104), comprising:
at least two scanning devices (140a-140e; 150a-150b) for each capturing at least one three dimensional, 3D, image of at least a portion of a surface of the object (104) to be measured and for capturing at least one 3D image of at least a portion of a surface of a reference object (106b) by at least one of the scanning devices (140a; 150a), wherein each respective scanning device (140b; 150b) includes a reference object (106b) thereon; and
a computing device for automatically transforming, using at least one 3D image of the at least portion of the surface of the reference object, captured 3D images of the portions of the surface of the object (104) to be measured into a common coordinate system and for automatically merging the captured 3D images of the portions of the surface of the object (104) to be measured in the common coordinate system.

9. The system of claim 8, wherein the captured 3D images of the portions of the surface of said object to be measured further includes color information regarding said object to be measured.

10. The system of claim 8 wherein said at least two scanning devices are **characterized by** a field of view and said field of view is adapted to provide for capturing both 3D images of said object to be measured and 3D images of said reference object at the same time.

11. The system of claim 8, wherein the scanning devices capture 3D images of the portions of the surface of the object to be measured in fields of view that are separate from fields of view for capturing of the 3D images of the portions of the reference object.

12. The system of claim 8, further comprising:
a plurality of scanning devices positionable in various locations with respect to said object to be measured such that each of the scanning devices has a respective first field of view of at least a portion of said object to be measured,
wherein each of the plurality of scanning devices includes a reference object having certain reference characteristics positioned thereon,
wherein each of the plurality of scanning devices has a respective second field of view oriented toward at least a portion of a reference object,
wherein each of the plurality of scanning devices is positioned with respect one another such that the second field of view of at least one of the scanning devices is oriented toward at least a portion of the surface of the reference object of another scanning device;
the plurality of scanning devices operative to capture 3D images of the respective portions of the surface of the object to be measured in the first field of view of each of the scanning devices;
the plurality of scanning devices operative to capture 3D images of the respective portions of the surface of the reference objects in the second field of view of each of the scanning devices that observes respective reference objects;
the computing device operative to automatically transform, using at least one of the 3D images of the respective portions of the surface of the reference objects, the captured 3D images of the respective portions of the surface of the object to be measured into a common coordinate system; and
the computing device operative to merge all of the captured 3D images of the respective portions of the surface of the object to be measured together in a common coordinate system.

13. The system of claim 8, further comprising:
first and second scanning devices of the at least two scanning devices positionable at a first configuration with respect to said object to be measured such that each of the scanning devices has a respective first field of view of at least a portion of the surface of said object to be measured,
wherein each of the scanning devices includes a reference object having certain reference characteristics positioned thereon,
wherein each of the scanning devices has a respective second field of view oriented toward at least a portion of the surface of a reference object,
wherein the scanning devices are positioned with respect one another such that the second field of view of one of the scanning devices is oriented toward at least a portion of the surface of the reference object located on the other scanning device;
the scanning devices operative to capture 3D images of the respective portions of the surface of said object to be measured in the first field of view of each of the scanning devices;
the scanning devices operative to capture a 3D image of the respective portion of the surface of the reference object in the second field of view of the scanning device that observes the respective portion of the surface of the reference object;
the computing device operative to automatically transform, using the 3D image of the respective portion of the surface of the reference object, the captured 3D images of the respective portions of the surface of the object to be measured captured at first configuration into a common coordinate system;
the computing device operative to automatically merge the 3D images of the respective portions of the surface of the object to be measured captured at first configuration in the common coordinate system;
the scanning devices repetitively repositionable one by one in an alternating manner in different configurations and:
the scanning devices operative to capture at each configuration images of the respective portions of the surface of the object to be measured in the first field of view of each of the scanning devices;
the scanning devices operative to capture at each configuration an image of the respective portion of the surface of the reference objects in the second field of view of the scanning device that observes the respective portion of the surface of the reference object;
the computing device operative to automatically transform, using an image of a respective portion of the surface of one of the reference objects, at each configuration captured 3D images of the respective portions of the surface of the object to be measured and the 3D images of the portions of the object to be measured captured and transformed from prior configurations into a common coordinate system;
the computing device operative to automatically merge at each configuration the 3D images of the respective portions of the surface of the object to be measured in the common coordinate system with the 3D images of the portions of the object to be measured, captured and transformed from prior configurations.

14. The system of claim 8, wherein the captured 3D image of a portion of the surface of the object to be measured is obtained with a structured-light triangulation method.

## Patentansprüche

1. Verfahren zur Oberflächenmessung eines Objekts (104), Folgendes umfassend:
Erfassen, durch jede von mindestens zwei Abtastvorrichtungen (140a-140e; 150a-150b), mindestens eines dreidimensionalen Bildes (3D-Bildes) von mindestens einem Teil einer Oberfläche des zu messenden Objekts (104), wobei jede Abtastvorrichtung (140b; 150b) ein darauf positioniertes Referenzobjekt (106b) enthält;
Erfassen, durch mindestens eine der Abtastvorrichtungen (140a; 150a), mindestens eines 3D-Bildes von mindestens einem Teil einer Oberfläche des Referenzobjektes (106b) auf einer anderen Abtastvorrichtung (140b; 150b);
Transformieren, durch eine Koordinaten-Transformationstechnik, unter Verwendung des mindestens einen 3D-Bildes des mindestens einen Teils der Oberfläche des Referenzobjektes (106b), erfasster 3D-Bilder der Teile der Oberfläche des zu messenden Objektes (104) in ein gemeinsames Koordinatensystem; und
Zusammenführen der erfassten 3D-Bilder der Teile der Oberfläche des zu messenden Objekts (104) im gemeinsamen Koordinatensystem.

2. Verfahren nach Anspruch 1, wobei die erfassten 3D-Bilder der Teile der Oberfläche des zu messenden Objekts ferner Informationen bezüglich des zu messenden Objekts enthalten.

3. Verfahren nach Anspruch 1, wobei 3D-Bilder mit einer Abtastvorrichtung erfasst werden, die durch ein Sichtfeld gekennzeichnet ist, und wobei das Sichtfeld so ausgelegt ist, dass es die gleichzeitige Erfassung sowohl von 3D-Bildern des zu messenden Objekts als auch von 3D-Bildern des Referenzobjekts ermöglicht.

4. Verfahren nach Anspruch 1, wobei die 3D-Bilder der Teile der Oberfläche des zu messenden Objekts in Sichtfeldern erfasst werden, die von den Sichtfeldern zur Erfassung der 3D-Bilder der Teile des Referenzobjekts getrennt sind.

5. Verfahren nach Anspruch 1, ferner Folgendes umfassend:
Positionieren mehrerer Abtastvorrichtungen an verschiedenen Orten in Bezug auf das zu messende Objekt, so dass jede der Abtastvorrichtungen ein jeweiliges erstes Sichtfeld aufweist, das auf mindestens einen Teil des zu messenden Objekts ausgerichtet ist, wobei jede der mehreren Abtastvorrichtungen ein Referenzobjekt mit bestimmten, darauf positionierten Referenzmerkmalen umfasst, wobei jede der mehreren Abtastvorrichtungen ein jeweiliges zweites Sichtfeld aufweist, das auf mindestens einen Teil eines Referenzobjekts ausgerichtet ist, wobei jede der mehreren Abtastvorrichtungen in Bezug zueinander so positioniert ist, dass das zweite Sichtfeld mindestens einer der Abtastvorrichtungen auf mindestens einen Teil der Oberfläche des Referenzobjekts einer anderen Abtastvorrichtung gerichtet ist;
Erfassen von 3D-Bildern der jeweiligen Teile der Oberfläche des zu messenden Objekts im ersten Sichtfeld jeder der Abtastvorrichtungen;
Erfassen von 3D-Bildern der jeweiligen Teile der Oberfläche der Referenzobjekte im zweiten Sichtfeld jeder der Abtastvorrichtungen, die die jeweiligen Referenzobjekte beobachten;
Transformieren, durch eine Koordinaten-Transformationstechnik, unter Verwendung mindestens eines der 3D-Bilder der jeweiligen Teile der Oberfläche der Referenzobjekte, der erfassten 3D-Bilder der jeweiligen Teile der Oberfläche des zu messenden Objekts in ein gemeinsames Koordinatensystem und Zusammenführen aller erfassten Bilder der jeweiligen Teile der Oberfläche des zu messenden Objekts zusammen in dem gemeinsamen Koordinatensystem.

6. Verfahren nach Anspruch 1, ferner Folgendes umfassend:
Positionieren einer ersten und einer zweiten Abtastvorrichtung der mindestens zwei Abtastvorrichtungen in einer ersten Konfiguration in Bezug auf das zu messende Objekt, so dass jede der ersten und der zweiten Abtastvorrichtung ein jeweiliges erstes Sichtfeld von mindestens einem Teil der Oberfläche des zu messenden Objekts aufweist, wobei jede der Abtastvorrichtungen ein Referenzobjekt mit bestimmten, darauf positionierten Referenzmerkmalen enthält, wobei jede der Abtastvorrichtungen ein jeweiliges zweites Sichtfeld aufweist, das auf mindestens einen Teil der Oberfläche eines Referenzobjekts ausgerichtet ist, wobei die Abtastvorrichtungen in Bezug zueinander so positioniert sind, dass das zweite Sichtfeld einer der Abtastvorrichtungen mindestens einen Teil der Oberfläche des Referenzobjekts beobachtet, das sich auf der anderen Abtastvorrichtung befindet;
Erfassen von 3D-Bildern der jeweiligen Teile der Oberfläche des zu messenden Objekts im ersten Sichtfeld jeder der Abtastvorrichtungen;
Erfassen eines 3D-Bildes des jeweiligen Teils der Oberfläche des Referenzobjekts im zweiten Sichtfeld der Abtastvorrichtung, das auf den jeweiligen Teil der Oberfläche des Referenzobjekts ausgerichtet ist;
Transformieren, unter Verwendung des 3D-Bildes von mindestens einem Teil der Oberfläche der Referenzobjekte, der erfassten 3D-Bilder der jeweiligen Teile der Oberfläche des zu messenden Objekts, die in der ersten Konfiguration erfasst wurden, in ein gemeinsames Koordinatensystem;
Zusammenführen der erfassten 3D-Bilder der jeweiligen Teile der Oberfläche des zu messenden Objekts, die in der ersten Konfiguration erfasst wurden, im gemeinsamen Koordinatensystem;
Wiederholtes Neupositionieren einer der ersten und zweiten Abtastvorrichtungen nacheinander in abwechselnder Weise in verschiedenen Konfigurationen und:
Erfassen, in jeder Konfiguration, von 3D-Bildern der jeweiligen Teile der Oberfläche des zu messenden Objekts im ersten Sichtfeld jeder der Abtastvorrichtungen;
Erfassen, in jeder Konfiguration, eines 3D-Bildes des jeweiligen Teils der Oberfläche der Referenzobjekte im zweiten Sichtfeld der Abtastvorrichtung, die den jeweiligen Teil der Oberfläche des Referenzobjekts beobachtet;
Transformieren, durch ein Koordinatentransformationsverfahren unter Verwendung des 3D-Bildes des jeweiligen Teils der Oberfläche eines der Referenzobjekte, in jeder Konfiguration der erfassten 3D-Bilder der jeweiligen Teile der Oberfläche des zu messenden Objekts und der 3D-Bilder der Teile des zu messenden Objekts, die aus früheren Konfigurationen erfasst wurden, in ein gemeinsames Koordinatensystem;
Zusammenführen, in jeder Konfiguration, der 3D-Bilder der jeweiligen Teile der Oberfläche des zu messenden Objekts in dem gemeinsamen Koordinatensystem mit den 3D-Bildern der Teile des zu messenden Objekts, die aus früheren Konfigurationen erfasst und transformiert wurden.

7. Verfahren nach Anspruch 1, wobei das erfasste 3D-Bild eines Teils der Oberfläche des zu messenden Objekts mittels eines Triangulationsverfahrens mit strukturiertem Licht erhalten wird.

8. System (100) zur Oberflächenmessung eines Objekts (104), Folgendes umfassend:
mindestens zwei Abtastvorrichtungen (140a-140e; 150a-150b) zum jeweiligen Erfassen mindestens eines dreidimensionalen Bildes (3D-Bildes) mindestens eines Teils einer Oberfläche des zu messenden Objekts (104) und zum Erfassen mindestens eines 3D-Bildes mindestens eines Teils einer Oberfläche eines Referenzobjekts (106b) durch mindestens eine der Abtastvorrichtungen (140a; 150a), wobei jede jeweilige Abtastvorrichtung (140b; 150b) ein Referenzobjekt (106b) darauf enthält; und
Computergerät zum automatischen Transformieren, unter Verwendung mindestens eines 3D-Bildes des mindestens einen Teils der Oberfläche des Referenzobjekts, erfasster 3D-Bilder der Teile der Oberfläche des Objekts (104), die gemessen werden sollen, in ein gemeinsames Koordinatensystem und zum automatischen Zusammenführen der erfassten 3D-Bilder der Teile der Oberfläche des Objekts (104), die in dem gemeinsamen Koordinatensystem gemessen werden sollen.

9. System nach Anspruch 8, wobei die erfassten 3D-Bilder der Teile der Oberfläche des zu messenden Objekts ferner Farbinformationen bezüglich des zu messenden Objekts enthalten.

10. System nach Anspruch 8, wobei die mindestens zwei Abtastvorrichtungen durch ein Sichtfeld gekennzeichnet sind und wobei das Sichtfeld so ausgelegt ist, dass es die gleichzeitige Erfassung sowohl von 3D-Bildern des zu messenden Objekts als auch von 3D-Bildern des Referenzobjekts erlaubt.

11. System nach Anspruch 8, wobei die Abtastvorrichtungen 3D-Bilder der Teile der Oberfläche des zu messenden Objekts in Sichtfeldern erfassen, die von den Sichtfeldern zur Erfassung der 3D-Bilder der Teile des Referenzobjekts getrennt sind.

12. System nach Anspruch 8, ferner umfassend:
mehrere Abtastvorrichtungen, die an verschiedenen Orten in Bezug auf das zu messende Objekt positionierbar sind, so dass jede der Abtastvorrichtungen ein jeweiliges erstes Sichtfeld von mindestens einem Teil des zu messenden Objekts hat, wobei jede der mehreren Abtastvorrichtungen ein Referenzobjekt mit bestimmten Referenzmerkmalen aufweist, das darauf positioniert ist, wobei jede der mehreren Abtastvorrichtungen ein jeweiliges zweites Sichtfeld aufweist, das auf mindestens einen Teil eines Referenzobjekts ausgerichtet ist, wobei jede der mehreren Abtastvorrichtungen in Bezug zueinander so positioniert ist, dass das zweite Sichtfeld mindestens einer der Abtastvorrichtungen auf mindestens einen Teil der Oberfläche des Referenzobjekts einer anderen Abtastvorrichtung ausgerichtet ist;
wobei die mehreren Abtastvorrichtungen zum Erfassen von 3D-Bildern der jeweiligen Teile der Oberfläche des zu messenden Objekts im ersten Sichtfeld jeder der Abtastvorrichtungen betreibbar sind;
wobei die mehreren Abtastvorrichtungen zum Erfassen von 3D-Bildern der jeweiligen Teile der Oberfläche der Referenzobjekte im zweiten Sichtfeld jeder der Abtastvorrichtungen, das die jeweiligen Referenzobjekte beobachtet, betreibbar sind;
wobei das Computergerät betreibbar ist, um unter Verwendung mindestens eines der 3D-Bilder der jeweiligen Teile der Oberfläche der Referenzobjekte die erfassten 3D-Bilder der jeweiligen Teile der Oberfläche des zu messenden Objekts automatisch in ein gemeinsames Koordinatensystem zu transformieren; und
wobei das Computergerät betreibbar ist, um alle erfassten 3D-Bilder der jeweiligen Teile der Oberfläche des zu messenden Objekts in einem gemeinsamen Koordinatensystem zusammenzuführen.

13. System nach Anspruch 8, ferner umfassend:
erste und zweite Abtastvorrichtungen der mindestens zwei Abtastvorrichtungen, die in einer ersten Konfiguration in Bezug auf das zu messende Objekt positionierbar sind, so dass jede der Abtastvorrichtungen ein jeweiliges erstes Sichtfeld von mindestens einem Teil der Oberfläche des zu messenden Objekts aufweist, wobei jede der Abtastvorrichtungen ein Referenzobjekt mit bestimmten, darauf positionierten Referenzmerkmalen enthält, wobei jede der Abtastvorrichtungen ein jeweiliges zweites Sichtfeld aufweist, das auf mindestens einen Teil der Oberfläche eines Referenzobjekts ausgerichtet ist, wobei die Abtastvorrichtungen in Bezug zueinander so positioniert sind, dass das zweite Sichtfeld einer der Abtastvorrichtungen auf mindestens einen Teil der Oberfläche des Referenzobjekts ausgerichtet ist, das sich auf der anderen Abtastvorrichtung befindet;
wobei die Abtastvorrichtungen betreibbar sind, um 3D-Bilder der jeweiligen Teile der Oberfläche des zu messenden Objekts im ersten Sichtfeld jeder der Abtastvorrichtungen zu erfassen;
wobei die Abtastvorrichtungen betreibbar sind, um ein 3D-Bild des jeweiligen Teils der Oberfläche des Referenzobjekts in dem zweiten Sichtfeld der Abtastvorrichtung zu erfassen, die den jeweiligen Teil der Oberfläche des Referenzobjekts beobachtet;
wobei das Computergerät betreibbar ist, um unter Verwendung des 3D-Bildes des jeweiligen Teils der Oberfläche des Referenzobjekts die erfassten 3D-Bilder der jeweiligen Teile der Oberfläche des zu messenden Objekts, die in der ersten Konfiguration erfasst wurden, automatisch in ein gemeinsames Koordinatensystem zu transformieren;
wobei das Computergerät betreibbar ist, um die 3D-Bilder der jeweiligen Teile der Oberfläche des zu messenden Objekts, die in der ersten Konfiguration erfasst wurden, in dem gemeinsamen Koordinatensystem automatisch zusammenzuführen;
wobei die Abtastvorrichtungen wiederholt nacheinander in abwechselnder Weise in verschiedenen Konfigurationen neu positionierbar sind und:
wobei die Abtastvorrichtungen betreibbar sind, um in jeder Konfiguration Bilder der jeweiligen Teile der Oberfläche des zu messenden Objekts im ersten Sichtfeld jeder der Abtastvorrichtungen zu erfassen;
wobei die Abtastvorrichtungen betreibbar sind, um in jeder Konfiguration ein Bild des jeweiligen Teils der Oberfläche der Referenzobjekte in dem zweiten Sichtfeld der Abtastvorrichtung, die den jeweiligen Teil der Oberfläche des Referenzobjekts beobachtet, zu erfassen;
wobei das Computergerät betreibbar ist, um unter Verwendung eines Bildes eines jeweiligen Teils der Oberfläche eines der Referenzobjekte in jeder Konfiguration erfasste 3D-Bilder der jeweiligen Teile der Oberfläche des zu messenden Objekts und die 3D-Bilder der Teile des zu messenden Objekts, die aus früheren Konfigurationen erfasst und transformiert wurden, automatisch in ein gemeinsames Koordinatensystem zu transformieren;
wobei das Computergerät betreibbar ist, um in jeder Konfiguration die 3D-Bilder der jeweiligen Teile der Oberfläche des zu messenden Objekts mit den 3D-Bildern der Teile des zu messenden Objekts, die aus früheren Konfigurationen erfasst und transformiert wurden, automatisch in dem gemeinsamen Koordinatensystem zusammenzuführen.

14. System nach Anspruch 8, wobei das erfasste 3D-Bild eines Teils der Oberfläche des zu messenden Objekts mittels eines Triangulationsverfahrens mit strukturiertem Licht erhalten wird.

## Revendications

1. Procédé de mesure de surface d'un objet (104), comprenant :
la capture, par chacun d'au moins deux dispositifs de balayage (140a-140e ; 150a-150b), d'au moins une image tridimensionnelle, 3D, d'au moins une partie d'une surface de l'objet (104) à mesurer, chaque dispositif de balayage (140b ; 150b) comportant un objet de référence (106b) positionné sur celui-ci ;
la capture, par au moins l'un des dispositifs de balayage (140a ; 150a), d'au moins une image 3D d'au moins une partie d'une surface de l'objet de référence (106b) sur un autre dispositif de balayage (140b ; 150b) ;
la transformation, par une technique de transformation de coordonnées, à l'aide de l'au moins une image 3D de l'au moins une partie de la surface de l'objet de référence (106b), d'images 3D capturées des parties de la surface de l'objet (104) à mesurer en un système de coordonnées commun ; et
la fusion des images 3D capturées des parties de la surface de l'objet (104) à mesurer dans le système de coordonnées commun.

2. Procédé selon la revendication 1, les images 3D capturées des parties de la surface de l'objet à mesurer comportant en outre des informations concernant l'objet à mesurer.

3. Procédé selon la revendication 1, des images 3D étant prises au moyen d'un dispositif de balayage **caractérisé par** un champ de vision et ledit champ de vision étant apte à permettre de capturer à la fois des images 3D dudit objet à mesurer et des images 3D dudit objet de référence en même temps.

4. Procédé selon la revendication 1, les images 3D des parties de la surface de l'objet à mesurer étant capturées dans des champs de vision qui sont séparés des champs de vision servant à capturer les images 3D des parties de l'objet de référence.

5. Procédé selon la revendication 1, comprenant en outre :
le positionnement d'une pluralité de dispositifs de balayage à divers emplacements par rapport à l'objet à mesurer de telle sorte que chacun des dispositifs de balayage a un premier champ de vision respectif orienté vers au moins une partie de l'objet à mesurer,
chacun de la pluralité des dispositifs de balayage comprenant un objet de référence ayant certaines caractéristiques de référence positionnées sur celui-ci,
chacun de la pluralité de dispositifs de balayage ayant un second champ de vision respectif orienté vers au moins une partie d'un objet de référence,
chacun de la pluralité de dispositifs de balayage étant positionné par rapport aux autres de telle sorte que le second champ de vision d'au moins un des dispositifs de balayage est dirigé vers au moins une partie de la surface de l'objet de référence d'un autre dispositif de balayage ;
la capture d'images 3D des parties respectives de la surface de l'objet à mesurer dans le premier champ de vision de chacun des dispositifs de balayage ;
la capture d'images 3D des parties respectives de la surface des objets de référence dans le second champ de vision de chacun des dispositifs de balayage qui observe les objets de référence respectifs ;
la transformation, par une technique de transformation de coordonnées, à l'aide d'au moins une des images 3D des parties respectives de la surface des objets de référence, des images 3D capturées des parties respectives de la surface de l'objet à mesurer en un système de coordonnées commun, et
la fusion de toutes les images capturées des parties respectives de la surface de l'objet à mesurer dans le système de coordonnées commun.

6. Procédé selon la revendication 1, comprenant en outre :
le positionnement des premier et second dispositifs de balayage des au moins deux dispositifs de balayage dans une première configuration par rapport audit objet à mesurer de telle sorte que chacun desdits premier et second dispositifs de balayage a un premier champ de vision respectif d'au moins une partie de la surface dudit objet à mesurer,
chacun desdits dispositifs de balayage comportant un objet de référence ayant certaines caractéristiques de référence positionnées sur celui-ci,
chacun desdits dispositifs de balayage ayant un second champ de vision respectif orienté vers au moins une partie de la surface d'un objet de référence,
lesdits dispositifs de balayage étant positionnés l'un par rapport à l'autre de telle sorte que le second champ de vision de l'un des dispositifs de balayage observe au moins une partie de la surface de l'objet de référence située sur l'autre dispositif de balayage ;
la capture d'images 3D des parties respectives de la surface dudit objet à mesurer dans le premier champ de vision de chacun desdits dispositifs de balayage ;
la capture d'une image 3D de la partie respective de la surface de l'objet de référence dans le second champ de vision du dispositif de balayage orienté vers la partie respective de la surface de l'objet de référence ;
la transformation, à l'aide de l'image 3D d'au moins une partie de la surface des objets de référence, desdites images 3D capturées des parties respectives de la surface dudit objet à mesurer capturées dans la première configuration en un système de coordonnées commun ;
la fusion des images 3D capturées des parties respectives de la surface dudit objet à mesurer capturées dans la première configuration dans le système de coordonnées commun ;
le repositionnement de manière répétée d'un des premier et second dispositifs de balayage un par un de manière alternée dans différentes configurations et :
la capture dans chaque configuration des images 3D des parties respectives de la surface dudit objet à mesurer dans le premier champ de vision de chacun des dispositifs de balayage ;
la capture dans chaque configuration d'une image 3D de la partie respective de la surface des objets de référence dans le second champ de vision du dispositif de balayage qui observe la partie respective de la surface de l'objet de référence ;
la transformation, par une technique de transformation de coordonnées, à l'aide de l'image 3D de la partie respective de la surface de l'un des objets de référence, dans chaque configuration, des images 3D capturées des parties respectives de la surface dudit objet à mesurer et des images 3D des parties dudit objet à mesurer capturées et transformées à partir de configurations antérieures en un système de coordonnées commun ;
la fusion pour chaque configuration des images 3D des parties respectives de la surface dudit objet à mesurer dans le système de coordonnées commun avec les images 3D des parties de l'objet à mesurer capturées et transformées à partir de configurations antérieures.

7. Procédé selon la revendication 1, l'image 3D capturée d'une partie de la surface dudit objet à mesurer étant obtenue par un procédé de triangulation par lumière structurée.

8. Système (100) de mesure de surface d'un objet (104), comprenant :
au moins deux dispositifs de balayage (140a-140e ; 150a-150b) destinés à capturer chacun au moins une image tridimensionnelle, en 3D, d'au moins une partie d'une surface de l'objet (104) à mesurer et à capturer au moins une image 3D d'au moins une partie d'une surface d'un objet de référence (106b) par au moins l'un des dispositifs de balayage (140a ; 150a), chaque dispositif de balayage respectif (140b ; 150b) comportant un objet de référence (106b) sur celui-ci ; et
un dispositif informatique servant à transformer automatiquement, à l'aide d'au moins une image 3D de l'au moins une partie de la surface de l'objet de référence, des images 3D capturées des parties de la surface de l'objet (104) à mesurer en un système de coordonnées commun et à fusionner automatiquement les images 3D capturées des parties de la surface de l'objet (104) à mesurer dans le système de coordonnées commun.

9. Système selon la revendication 8, les images 3D capturées des parties de la surface dudit objet à mesurer comportant en outre des informations de couleur concernant ledit objet à mesurer.

10. Système selon la revendication 8, lesdits au moins deux dispositifs de balayage étant **caractérisés par** un champ de vision et ledit champ de vision étant apte à permettre de capturer à la fois des images 3D dudit objet à mesurer et des images 3D dudit objet de référence en même temps.

11. Système selon la revendication 8, les dispositifs de balayage capturant des images 3D des parties de la surface de l'objet à mesurer dans des champs de vision qui sont séparés des champs de vision servant à capturer les images 3D des parties de l'objet de référence.

12. Système selon la revendication 8, comprenant en outre :
une pluralité de dispositifs de balayage pouvant être positionnés à divers emplacements par rapport audit objet à mesurer de telle sorte que chacun des dispositifs de balayage a un premier champ de vision respectif d'au moins une partie dudit objet à mesurer,
chacun de la pluralité de dispositifs de balayage comportant un objet de référence ayant certaines caractéristiques de référence positionnées sur celui-ci,
chacun de la pluralité de dispositifs de balayage ayant un second champ de vision respectif orienté vers au moins une partie d'un objet de référence,
chacun de la pluralité de dispositifs de balayage étant positionné par rapport aux autres de telle sorte que le second champ de vision d'au moins l'un des dispositifs de balayage est orienté vers au moins une partie de la surface de l'objet de référence d'un autre dispositif de balayage ;
la pluralité de dispositifs de balayage fonctionnant pour capturer des images 3D des parties respectives de la surface de l'objet à mesurer dans le premier champ de vision de chacun des dispositifs de balayage ;
la pluralité de dispositifs de balayage fonctionnant pour capturer des images 3D des parties respectives de la surface des objets de référence dans le second champ de vision de chacun des dispositifs de balayage qui observe les objets de référence respectifs ;
le dispositif informatique fonctionnant pour transformer automatiquement, à l'aide d'au moins une des images 3D des parties respectives de la surface des objets de référence, les images 3D capturées des parties respectives de la surface de l'objet à mesurer en un système de coordonnées commun ; et
le dispositif informatique fonctionnant pour fusionner toutes les images 3D capturées des parties respectives de la surface de l'objet à mesurer dans un système de coordonnées commun.

13. Système selon la revendication 8, comprenant en outre :
des premier et second dispositifs de balayage des au moins deux dispositifs de balayage positionnables dans une première configuration par rapport audit objet à mesurer de telle sorte que chacun des dispositifs de balayage a un premier champ de vision respectif d'au moins une partie de la surface dudit objet à mesurer,
chacun des dispositifs de balayage comportant un objet de référence ayant certaines caractéristiques de référence positionnées sur celui-ci,
chacun des dispositifs de balayage ayant un second champ de vision respectif orienté vers au moins une partie de la surface d'un objet de référence,
les dispositifs de balayage étant positionnés les uns par rapport aux autres de sorte que le second champ de vision de l'un des dispositifs de balayage est orienté vers au moins une partie de la surface de l'objet de référence située sur l'autre dispositif de balayage ;
les dispositifs de balayage fonctionnant pour capturer des images 3D des parties respectives de la surface dudit objet à mesurer dans le premier champ de vision de chacun des dispositifs de balayage ;
les dispositifs de balayage fonctionnant pour capturer une image 3D de la partie respective de la surface de l'objet de référence dans le second champ de vision du dispositif de balayage qui observe la partie respective de la surface de l'objet de référence ;
le dispositif informatique fonctionnant pour transformer automatiquement, à l'aide de l'image 3D de la partie respective de la surface de l'objet de référence, les images 3D capturées des parties respectives de la surface de l'objet à mesurer capturées dans la première configuration en un système de coordonnées commun ;
le dispositif informatique fonctionnant pour fusionner automatiquement les images 3D des parties respectives de la surface de l'objet à mesurer capturées dans la première configuration dans le système de coordonnées commun ;
les dispositifs de balayage pouvant être repositionnés de manière répétée un par un en alternance dans différentes configurations et :
les dispositifs de balayage fonctionnant pour capturer dans chaque configuration des images des parties respectives de la surface de l'objet à mesurer dans le premier champ de vision de chacun des dispositifs de balayage ;
les dispositifs de balayage fonctionnant pour capturer dans chaque configuration une image de la partie respective de la surface des objets de référence dans le second champ de vision du dispositif de balayage qui observe la partie respective de la surface de l'objet de référence ;
le dispositif informatique fonctionnant pour transformer automatiquement, à l'aide d'une image d'une partie respective de la surface de l'un des objets de référence, dans chaque configuration, des images 3D capturées des parties respectives de la surface de l'objet à mesurer et des images 3D des parties de l'objet à mesurer capturées et transformées à partir de configurations antérieures en un système de coordonnées commun ;
le dispositif informatique fonctionnant pour fusionner automatiquement dans chaque configuration les images 3D des parties respectives de la surface de l'objet à mesurer dans le système de coordonnées commun avec les images 3D des parties de l'objet à mesurer, capturées et transformées à partir de configurations antérieures.

14. Système selon la revendication 8, l'image 3D capturée d'une partie de la surface de l'objet à mesurer étant obtenue à l'aide d'un procédé de triangulation par lumière structurée.
